# EUROPÄISCHE PATENTANMELDUNG

(11) **EP 3 309 187 A1**
(43) Veröffentlichungstag der Anmeldung: **18.04.2018**
(21) Anmeldenummer: 16194078.8
(22) Anmeldetag: 17.10.2016
(51) Int. Cl.: C08G 18/48, C08G 18/50, C08G 18/10, C08G 18/22, C08G 18/28, C09J 175/08

(54) **REAKTIVWEICHMACHER FÜR FEUCHTIGKEITSHÄRTENDE ZUSAMMENSETZUNGEN MIT SILANFUNKTIONELLEN POLYMEREN**

(71) Anmelder: Sika Technology AG, 6340 Baar (CH)
(72) Erfinder: Choffat, Fabien, 4522 Rüttenen (CH); Kramer, Andreas, 8006 Zürich (CH); Rohner, Melanie, 8957 Spreitenbach (CH)
(74) Vertreter: Sika Patent Attorneys

(57) **Zusammenfassung**

Gegenstand der vorliegenden Erfindung ist eine feuchtigkeitshärtende Zusammensetzung umfassend
a) mindestens ein silanfunktionelles Polymer P, und
b) mindestens einen Reaktivweichmacher W,
wobei der Reaktivweichmacher W vorgängig hergestellt wurde durch die
Reaktion mindestens eines hydroxyfunktionellen Polymers POH der Formel (V) mit n Äquivalenten mindestens eines Silans S der Formel (VI) oder Oligomeren davon. Weiterhin ist Gegenstand der vorliegenden Erfindung ein Verfahren zur Herstellung des Reaktivweichmachers W und dessen Verwendung in feuchtigkeitshärtenden Zusammensetzungen auf Basis silanfunktioneller Polymere.
Derartige Zusammensetzungen eignen sich als Klebstoffe, Dichtstoffe und Beschichtungen mit guten mechanischen Eigenschaften und weisen den Vorteil auf, dass sie einfach und günstig herstellbar sind und nicht zu Weichmachermigration neigen.

## Beschreibung

### Technisches Gebiet

Die vorliegende Erfindung betrifft das Gebiet der elastischen Klebstoffe, Dichtstoffe und Beschichtungen auf Basis silanfunktioneller Polymere.

### Stand der Technik

Zusammensetzungen auf Basis silanfunktioneller Polymere und deren Verwendung als Klebstoffe, Dichtstoffe oder Beschichtungen sind seit längerem bekannt und vielfach beschrieben. Als silanfunktionelle Polymere kommen dabei Polymere, welche mit verschiedenen feuchtigkeitsreaktiven Silangruppen versehen sind, zum Einsatz, die mit anderen Bestandteilen, wie zum Beispiel Füllstoffen, Weichmachern und Katalysatoren zu feuchtigkeitshärtenden Zusammensetzungen formuliert werden. Je nach Art und Menge der Bestandteile lassen sich so Zusammensetzungen mit unterschiedlichen Eigenschaften und Anwendungsmöglichkeiten herstellen. Aus Kostengründen und zur Einstellung von Verarbeitbarkeitsparametern wie z.B. Viskosität enthalten solche Zusammensetzungen meist erhebliche Mengen an Weichmachern. Bekannt sind beispielsweise Weichmacher auf Phthalatbasis, Polyether, Benzoesäureester oder andere Esterverbindungen. Je nach Anwendung ist der Einsatz solcher Weichmacher jedoch nicht unproblematisch. Bei Verklebungen beispielsweise kommt es oft vor, dass Weichmacher auf Grund ihrer Mobilität und chemisch-physikalischer Affinität in bestimmte Klebeuntergründe einwandern und die Klebeuntergründe optisch beeinträchtigen oder mechanisch beschädigen. Dies kann zum Beispiel bei Holzverklebungen oder auf Natursteinsubstraten zu dunklen Flecken führen, die nur sehr schwer zu entfernen sind oder bei der Verklebung von transparenten amorphen Kunststoffen, wie beispielsweise Polystyrol, Polycarbonat oder Polymethylmethacrylat, zu Spannungsrissen führen. Weiterhin kann es problematisch sein, wenn z.B. Fugendichtungen übermalt werden müssen und Weichmacher in die Farbschichten einwandern. Ein Weg, diesen Nachteilen zu begegnen ist die Verwendung sogenannter Reaktivweichmacher. Diese können mit den silanfunktionellen Polymeren reagieren und werden kovalent fixiert, wobei sie ihre ungünstige Auswanderungstendenz verlieren. Bei diesen Reaktivweichmachern handelt es sich meist auch um silanfunktionelle Polymere, die aber nur eine Silangruppe tragen, im Gegensatz zu silanfunktionellen Polymeren mit zwei oder mehr Silangruppen, die wie oben beschrieben feuchtigkeitshärtend unter Netzwerkbildung zum ausgehärteten Dichtstoff-, Klebstoff- oder Beschichtungsprodukt aushärten. Da solche monofunktionellen Reaktivweichmacher synthetisch gesehen aber praktisch gleich aufgebaut sind wie die silanfunktionellen Polymere zur Aushärtung, sind sie ebenfalls teuer und eine wesentliche Kostenersparnis der Kleb- oder Dichtstoffformulierung durch hohen Weichmacheranteil kann unter Verwendung solcher Weichmacher nicht mehr erreicht werden. Ganz besonders ungünstig ist dies bei Formulierungen, die extrem hohe Weichmacheranteile enthalten, beispielsweise sprühbare Beschichtungen, flüssig applizierbare Folien oder Vergussmassen mit niedriger Viskosität. Solche können mit Verwendung von herkömmlichen Reaktivweichmachern fast nicht mehr wirtschaftlich hergestellt werden. Aber auch niedrigviskose Dichtmassen oder Zusammensetzungen mit geringen mechanischen Anforderungen, wie beispielsweise Parkettkleber, werden durch die Verwendung von herkömmlichen Reaktivweichmachern extrem verteuert.

### Darstellung der Erfindung

Aufgabe der vorliegenden Erfindung ist es daher, Zusammensetzungen auf Basis silanfunktioneller Polymere zur Verfügung zu stellen, welche die Nachteile des Standes der Technik überwinden und günstige, leicht herstellbare Reaktivweichmacher enthalten.

Überaschenderweise wurde nun gefunden, dass Zusammensetzungen gemäss Anspruch 1 diese Aufgabe lösen.
Der Einsatz von Reaktivweichmachern, die aus hydroxyfunktionellen Polymeren und Silanen hergestellt wurden, in feuchtigkeitshärtenden Zusammensetzungen auf Basis silanfunktioneller Polymere führt überraschenderweise dazu, dass diese Zusammensetzungen unerwartet gute mechanische Eigenschaften nach Aushärtung besitzen. Diese Reaktivweichmacher sind synthetisch einfach aus günstigen Rohstoffen zugänglich und besitzen die Vorteile herkömmlicher Reaktivweichmacher, wie beispielsweise tiefe Migrationsneigung, ohne jedoch die Zusammensetzungen massgeblich zu verteuern.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine feuchtigkeitshärtende Zusammensetzung umfassend
a) mindestens ein silanfunktionelles Polymer **P,** und
b) mindestens einen Reaktivweichmacher **W,**
dadurch gekennzeichnet, dass
der Reaktivweichmacher **W** vorgängig hergestellt wurde durch die Reaktion mindestens eines hydroxyfunktionellen Polymers **POH** der Formel (V) mit n Äquivalenten mindestens eines Silans **S** der Formel (VI) oder Oligomeren davon

R⁹(̵OH)ₙ (V)

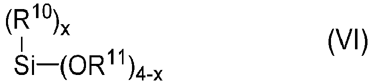

wobei
R⁹ für einen n-wertigen, über Kohlenstoff gebundenen Rest eines linearen oder verzweigten Polymers mit einem mittleren Molekulargewicht von zwischen 250 und 20'000 g/mol steht;
R¹¹ für eine Alkylgruppe mit 1 bis 6 C-Atomen steht;
R¹⁰ für eine Alkylgruppe mit 1 bis 10 C-Atomen steht, welche gegebenenfalls ein oder mehrere Heteroatome, ausgewählt aus der Gruppe Stickstoff, Sauerstoff und Schwefel, enthält;
x für 0, 1 oder 2 steht; und
n für eine ganze Zahl zwischen 1 und 3 steht.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Im vorliegenden Dokument bezeichnet der Term "Silan" Verbindungen, welche einerseits mindestens eine, üblicherweise zwei, drei oder vier über Si-O-Bindungen direkt an das Siliciumatom gebundene Alkoxygruppen oder Acyloxygruppen aufweisen. Der Term "Organosilan" bezeichnet Silane, welche zudem mindestens einen, manchmal auch zwei oder drei über eine Si-C-Bindung, direkt an das Siliciumatom gebundenen organischen Rest aufweisen. Derartige Silane sind dem Fachmann auch als Organoalkoxysilane bzw. Organoacyloxysilane bekannt. "Tetraalkoxysilane" stellen folglich gemäss dieser Definition keine Organosilane dar, jedoch gehören sie zu den Silanen. Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Alkoxy- oder Acyloxysilangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Silangruppen-haltige Polymere sind dabei insbesondere Silangruppen-haltige organische Polymere, welche üblicherweise und insbesondere in diesem Dokument gleichbedeutend auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Dialkylzinn(IV)-carboxylaten, katalysiert.

Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.

Als "Aminosilane", "Hydroxysilane", bzw. "Mercaptosilane" werden Organosilane bezeichnet, deren organischer Rest eine Aminogruppe, Hydroxylgruppe, bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Als "Raumtemperatur" wird eine Temperatur von ca. 23 °C bezeichnet.

Alle im Dokument erwähnten Industriestandards und Normen beziehen sich auf die zum Zeitpunkt der Einreichung der Erstanmeldung gültigen Fassung. Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mn einer oligomeren oder polymeren Mischung von Molekülen oder Resten bezeichnet, welches üblicherweise mittels Gelpermeationschromatographie (GPC) gegen Polystyrol als Standard bestimmt wird.

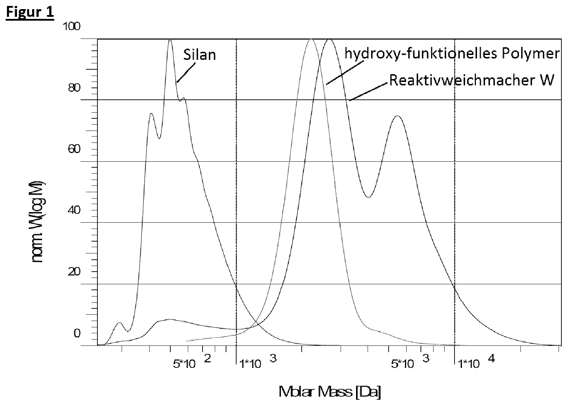

Figur 1 zeigt eine beispielhafte GPC Analyse (Massenverteilung) mit dem Signal des Silans **S,** des hydroxyfunktionellen Polymers **POH** und dem Reaktivweichmacher **W.** Die Bedeutung dieser Spezies wird weiter unten im Detail erläutert.

Die erfindungsgemässe Zusammensetzung enthält mindestens ein silanfunktionelles Polymer **P** mit Alkoxy-Endgruppen, wobei diese Endgruppen insbesondere Endgruppen der Formel (I) sind.

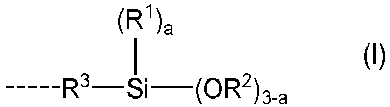

Dabei steht der Rest R¹ für eine Alkylgruppe mit 1 bis 8 C-Atomen, insbesondere für eine Methyl- oder für eine Ethylgruppe.

Der Rest R² steht für eine Alkylgruppe mit 1 bis 12 C-Atomen, insbesondere für eine Alkylgruppe mit 2 bis 8 C-Atomen, bevorzugt für eine Methyl-, Ethyl- oder für eine Isopropylgruppe, am meisten bevorzugt für eine Methyl- oder Ethylgruppe.

Der Rest R³ steht für eine lineare oder verzweigte, gegebenenfalls cyclische, Alkylengruppe mit 1 bis 12 C-Atomen, gegebenenfalls mit aromatischen Anteilen, und gegebenenfalls mit einem oder mehreren Heteroatomen, insbesondere mit einem oder mehreren Stickstoff- und/oder Sauerstoffatomen. Der Index a steht für einen Wert von 0 oder 1 oder 2, insbesondere für einen Wert von 0.

Meist bevorzugt handelt es sich beim Rest R² um eine Methyl- oder Ethylgruppe, das heisst also, dass in der erfindungsgemässen Zusammensetzung wie sie vorhergehend beschrieben worden ist, die Alkoxy-Endgruppen des silanfunktionellen Polymers **P** Methoxy- oder Ethoxygruppen sind.

Der Vorteil von silanfunktionellen Polymeren, welche als Alkoxy-Endgruppen Ethoxygruppen aufweisen ist, dass bei der Vernetzung mit Wasser Ethanol freigesetzt wird, wodurch die Zusammensetzungen aus ökologischer und toxikologischer Sicht unbedenklich sind.

Der Vorteil von silanfunktionellen Polymeren, welche als Alkoxy-Endgruppen Methoxygruppen aufweisen ist, dass bei der Vernetzung mit Wasser besonders reaktiv sind und auf toxikologisch bedenkliche Vernetzungskatalysatoren wie beispielsweise Zinnkatalysatoren verzichtet werden kann.

Innerhalb einer Silangruppe der Formel (I) stehen R¹ und R² jeweils unabhängig voneinander für die beschriebenen Reste. So sind beispielsweise auch Verbindungen der Formel (I) möglich, welche Diethoxy-methoxysilane (R² = Ethyl, R² = Ethyl, R² = Methyl) darstellen.

In einer ersten Ausführungsform ist das silanfunktionelle Polymer **P** ein silanfunktionelles Polyurethanpolymer **P1,** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist. In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Hydroxysilan, ein Mercaptosilan oder ein Aminosilan, insbesondere ein Hydroxysilan oder ein Aminosilan. Bevorzugt ist das Aminosilan ein Aminosilan **AS** der Formel (II), 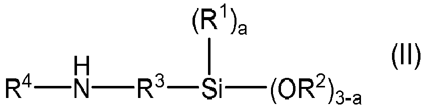 wobei R¹, R², R³ und a bereits vorhergehend beschrieben worden sind und R⁴ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (III) steht.

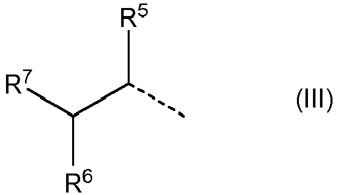

Dabei stehen die Reste R⁵ und R⁶ jeweils unabhängig voneinander für ein Wasserstoffatom oder für einen Rest aus der Gruppe bestehend aus -R⁸, -COOR⁸ und -CN.

Der Rest R⁷ steht für ein Wasserstoffatom oder für einen Rest aus der Gruppe bestehend aus -CH₂-COOR⁸, -COOR⁸, -CONHR⁸, -CON(R⁸)₂, -CN, -NO₂, -PO(OR⁸)₂, -SO₂R⁸ und -SO₂OR⁸.

Der Rest R⁸ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan, 3-Aminopropyltriethoxysilan, 3-Aminopropyldiethoxymethylsilan; sekundäre Aminosilane wie N-Butyl-3-aminopropyltrimethoxysilan, N-Butyl-3-aminopropyltriethoxysilan, N-Phenyl-3-aminopropyltrimethoxysilan und N-Phenyl-3-aminopropyltriethoxysilan; die Produkte aus der Michael-artigen Addition von primären Aminosilanen wie 3-Aminopropyltrimethoxysilan oder 3-Aminopropyldiethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Isopropoxy-, n-Propoxy- sowie entsprechenden Butoxy-, Pentoxy- Hexoxy- Heptoxy- und Octoxygruppen anstelle der Methoxy- oder Ethoxygruppen am Silicium. Als Aminosilane **AS** besonders geeignet sind sekundäre Aminosilane, insbesondere Aminosilane **AS,** bei denen R⁴ in Formel (II) verschieden von H ist. Bevorzugt sind die Michael-artigen Addukte, insbesondere N-(3-Trimethoxysilyl-propyl)-aminobernsteinsäurediethylester und N-(3-Triethoxysilyl-propyl)-amino-bernsteinsäurediethylester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Aminosilane, eignen sich weiterhin insbesondere auch solche, wie sie erhältlich sind aus der Reaktion eines N-Aminoethyl-aminoalkyltrialkoxysilans, mit einem Malein- oder Fumarsäurediester. Derartige geeignete Aminosilane sind beispielsweise beschrieben in WO 01/00632, dessen gesamte Offenbarung hiermit durch Bezugnahme eingeschlossen ist. Mit entsprechenden Aminosilanen hergestellte silanterminierte Polyurethanpolymere sind beispielsweise beschrieben in der europäischen Patentanmeldung mit der Anmeldenummer EP09153120.2, deren gesamte Offenbarung hiermit ebenfalls durch Bezugnahme eingeschlossen ist.

Als Hydroxysilane für die Herstellung von Polymeren **P1** eignen sich beispielsweise solche, wie sie in der EP2805985 (insbesondere S. 2, Z. 51 bis S. 3, Z. 28) und der WO 2013/174891 (insbesondere S. 6, Z. 11 bis S. 8, Z. 5) und der WO 2013/174892 (insbesondere S. 6, Z. 6 bis S. 7, Z. 6) beschreiben sind, deren gesamte Offenbarung hiermit durch Bezugnahme eingeschlossen ist.

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate die aus der Copolymerisation von CO₂ mit Epoxiden, wie Ethylenoxid und Propylenxid, zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Alle genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Die über Hydroxysilane funktionalisierten Polymere **P1,** die für die vorliegende Erfindung geeignet und bevorzugt sind, sind beispielsweise in WO 2013/174891 und WO 2013/174892 beschrieben, deren gesamte Offenbarung hiermit durch Bezugnahme eingeschlossen ist.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Als Isocyanatosilan **IS** geeignet sind Verbindungen der Formel (IV).

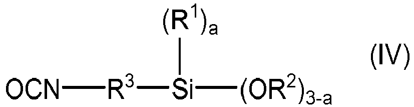

Dabei sind R¹, R², R³ und a bereits vorhergehend beschrieben worden.

Beispiele für geeignete Isocyanatosilane **IS** der Formel (IV) sind Isocyanatomethyltrimethoxysilan, Isocyanatomethyldimethoxymethylsilan 3-Isocyanatopropyltrimethoxysilan, 3-Isocyanatopropyldimethoxymethylsilan, Isocyanatomethyltriethoxysilan, Isocyanatomethyldiethoxymethylsilan 3-Isocyanatopropyltriethoxysilan, 3-Isocyanatopropyldiethoxymethylsilan, und deren Analoga mit Isopropoxygruppen anstelle der Methoxy- oder Ethoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol. Andererseits eignen sich auch Hydroxylgruppen aufweisende, insbesondere Hydroxylgruppen terminierte, Polyurethanpolymere zur Umsetzung mit Isocyanatosilanen **IS** der Formel (IV). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen Silquest^{®} A-Link Silane von der Firma Momentive Performance Materials Inc., USA.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.

In weiteren Ausführungsformen handelt es sich beim silanfunktionellen Polymer **P** um silanfunktionelle Polyetherpolymere, die über eine Copolymerisiserung von Epoxidmonomeren mit Glycidoxysilanen erhältlich sind, oder um silanfunktionelle Polybutadiene, die beispielsweise über Hydrosilylierung von Polybutadien erhältlich sind.

Bevorzugt handelt es sich beim silanfunktionellen Polymer **P** um ein silanfunktionelles Polymer **P1** oder **P2,** insbesondere **P1.**

Gegenüber den silanfunktionelles Polymeren **P3** weisen silanfunktionelle Polymere **P1** und **P2** den Vorteil auf, dass sie reaktiver sind und somit schneller vernetzen. Ein weiterer Vorteil liegt darin, dass sie verbesserte mechanische Eingeschaften aufweisen, welche mit denen von klassischen Polyurethanzusammensetzungen vergleichbar sind. Weiterhin weisen sie eine geringere Tendenz zu Kriechverhalten auf und ein verbessertes Rückstellvermögen. Diese Eigenschaften sind besonders ausgeprägt bei silanfunktionellen Polymern **P1,** wodurch diese meist bevorzugt sind. Durch die Gesamtheit dieser Eigenschaften, eignen sich bevorzugte Zusammensetzungen insbesondere für den Einsatz in Fugen, beispielsweise in Dilatationsfugen.

Üblicherweise ist das silanfunktionelle Polymer **P** in einer Menge von 10 bis 80 Gew.-%, insbesondere in einer Menge von 15 bis 50 Gew.-%, bevorzugt 20 bis 40 Gew.-%, bezogen auf die gesamte Zusammensetzung, vorhanden.

Weiterhin umfasst die erfindungsgemässe Zusammensetzung mindestens einen Reaktivweichmacher **W,** bevorzugt in einer Menge zwischen 5 und 35 Gew.-%, insbesondere zwischen 10 und 30 Gew.-%, besonders bevorzugt zwischen 15 und 25 Gew.-%, bezogen auf die gesamte Zusammensetzung. Der Reaktivweichmacher **W** ist ein Reaktionsprodukt aus mindestens einem hydroxyfunktionellen Polymer **POH** der Formel (V) mit n Äquivalenten mindestens eines Silans **S** der Formel (VI) oder Oligomeren davon

R⁹(̵OH) ₙ (V)

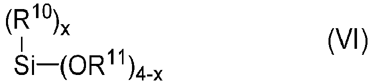

wobei
R⁹ für einen n-wertigen, über Kohlenstoff gebundenen Rest eines linearen oder verzweigten Polymers mit einem mittleren Molekulargewicht von zwischen 250 und 20'000 g/mol, bevorzugt zwischen 400 und 15'000 g/mol, insbesondere zwischen 450 und 12'000 g/mol, besonders bevorzugt zwischen 500 und 10'000 g/mol, am meisten bevorzugt zwischen 600 und 5'000 g/mol steht;
R¹¹ für eine Alkylgruppe mit 1 bis 6 C-Atomen, bevorzugt eine Methyl- oder Ethylgruppe, steht;
R¹⁰ für eine Alkylgruppe mit 1 bis 10 C-Atomen steht, welche gegebenenfalls ein oder mehrere Heteroatome, ausgewählt aus der Gruppe Stickstoff, Sauerstoff und Schwefel, bevorzugt eine Vinyl-, 3-Aminoproypyl, 3-Glycidyloxypropyl- oder 3-Mercaptopropylgruppe, enthält;
x für 0, 1 oder 2 steht, bevorzugt für 0 oder 1; und
n für eine ganze Zahl zwischen 1 und 3, bevorzugt 1 oder 2, am meisten bevorzugt 1, steht.

Als hydroxyfunktionelle Polymere **POH** eignen sich Polymere mit einer, zwei, oder drei Hydroxylgruppen pro Polymer, die in Formel (V) dargestellt sind. Bevorzugt sind Polymere mit einer Hydroxylgruppe (Monoole) oder zwei Hydroxylgruppen (Diole), insbesondere Monoole.

Bevorzugt umfasst das hydroxyfunktionelle Polymer **POH** einen Polyether, und/oder ein Kohlenwasserstoffpolymer, wobei diese mindestens eine Hydroxylgruppe aufweisen müssen.

Als Polyethermono- oder polyole, auch Polyoxyalkylenmono- oder polyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyethylenmono- oder polyole und Polyoxypropylenmono- oder polyole, insbesondere Polyoxyethylenmonoole, Polyoxyethylendiole, Polyoxypropylenmonoole, Polyoxypropylendiole, Polyoxyethylentriole und Polyoxypropylentriole.

Insbesondere geeignet sind Polyoxyalkylenmonoole, Polyoxyalkylendiole oder Polyoxyalkylentriole mit einem Ungesättigtheitsgrad tiefer als 0.02 mEq/g und mit einem Molekulargewicht im Bereich von 1'000 bis 20'000 g/mol, sowie Polyoxyethylendiole, Polyoxyethylentriole, Polyoxypropylendiole und Polyoxypropylentriole mit einem Molekulargewicht von 400 bis 20'000 g/mol. Ebenfalls besonders geeignet sind so genannte Ethylenoxid-terminierte ("EOendcapped", ethylene oxide-endcapped) Polyoxypropylenmono- oder polyole. Letztere sind spezielle Polyoxypropylenpolyoxyethylenmono- oder polyole, die beispielsweise dadurch erhalten werden, dass reine Polyoxypropylenmonooder polyole, insbesondere Polyoxypropylenmonoole, Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylenmonoole, Polyoxypropylenpolyoxyethylendiole und Polyoxypropylenpolyoxyethylentriole, besonders bevorzugt sind Polyoxypropylenpolyoxyethylenmonoole und Polyoxypropylenpolyoxyethylendiole, insbesondere Polyoxypropylenpolyoxyethylenmonoole.

Ebenfalls geeignet sind weiterhin hydroxylgruppenhaltige Kohlenwasserstoffpolymere, also Polykohlenwasserstoffmono- oder polyole, auch Oligohydrocarbonole genannt, beispielsweise mono- oder polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können. Weiterhin geeignet sind mono- oder polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw.

Alkoholen erhaltenen Epoxypolyester bzw. Epoxypolyether, oder durch Hydroformylierung und Hydrierung ungesättigter Öle erhaltene Mono- oder Polyole. Weiterhin geeignet sind Mono- oder Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Weiterhin geeignet sind Mono- oder Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Weiterhin geeignet sind Hydroxylgruppen terminierte Polybutadienmono- oder polyole, wie beispielsweise solche, die durch Polymerisation von 1,3-Butadien und Allylalkohol oder durch Oxidation von Polybutadien hergestellt werden, sowie deren Hydrierungsprodukte.

Als Silan **S** eignen sich alle Silane der Formel (VI) oder Oligomere davon. Insbesondere eignen sich Aminosilane wie insbesondere 3-Aminopropyltrimethoxysilan, 3-Aminopropyl-dimethoxymethylsilan, N-(2-Aminoethyl)-3-aminopropyl-trimethoxysilan, N-(2-Aminoethyl)-3-aminopropyldimethoxymethylsilan, N-(2-Aminoethyl)-N'-[3-(trimethoxysilyl)propyl]-ethylendiamin oder deren Analoga mit Ethoxy- anstelle von Methoxygruppen. Weiterhin eignen sich N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane. Weiterhin eignen sich insbesondere Tetramethoxysilan, Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, insbesondere Vinyltrimethoxysilan oder Vinyltriethoxysilan;

In einer bevorzugten Ausführungsform umfasst das Silan **S** hauptsächlich oder ausschliesslich oligomere Silane. Oligomere Silane sind Oligomere, die aus Silanen der Formel (VI) durch Kondensation unter Bildung von Slloxanbindungen zugänglich sind. Geeignete oligomere Silane haben bevorzugt ein Molekulargewicht von zwischen 200 und 2'500 g/mol, bevorzugt zwischen 250 und 2'000 g/mol, insbesondere zwischen 300 und 1'500 g/mol, besonders bevorzugt zwischen 350 und 1'000 g/mol. Beispielsweise geeignet als Silan **S** sind oligomere Silane, wie sie unter dem Namen Dynasilan^{®} Oligomere (Firma Evonik) erhältlich sind, beispielsweise Dynasilan^{®} 6490. Oligomere Silane haben den Vorteil, dass sie besonders hohe Zugfestigkeiten in den erfindungsgemässen Zusammensetzungen ermöglichen, insbesondere in Kombination mit einem hydroxyfunktionellen Polymer **POH** mit einem Molekulargewicht von weniger als 1'000 g/mol. In Kombination mit einem hydroxyfunktionellen Polymer **POH** mit einem Molekulargewicht von 1'000 g/mol oder mehr ermöglichen sie vorteilhaft eine besonders gute Balance von hoher Zugfestigkeit und hoher Bruchdehnung.

Am meisten bevorzugt als Silane **S** sind Tetralkoxysilane, Trialkoxyvinylsilane, Aminopropyltriakoxysilane, oder Oligomere solcher Silane, wobei die Alkoxygruppen bevorzugt Methoxy- oder Ethoxygruppen sind.

Der Reaktivweichmacher **W** wird aus dem mindestens einen hydroxyfunktionellen Polymer **POH** und dem mindestens einen Silan **S,** oder Oligomeren davon, hergestellt. Bei dieser Reaktion handelt es sich um eine Umesterungsreaktion am Silanester, wobei mindestens ein Hydroxyl des Polymers **POH** der Formel (V) mit mindestens einer Alkoxy- oder Hydroxylgruppe am Siliziumatom des Silans **S** der Formel (VI) kondensiert und n Äquivalente eines niedermolekularen Alkohols als Spaltprodukt entsteht. Mögliche und bevorzugte Produkte dieser Reaktion sind in Formeln (VII) und (VIII) dargestellt

R¹¹-OH (VII)

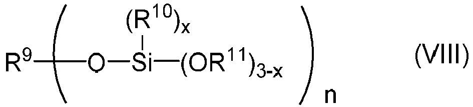

wobei R⁹, R¹⁰, R¹¹, n und x die vorgängig beschriebenen Bedeutungen aufweisen. Formel (VIII) zeigt dabei eine bevorzugte Form des Reaktivweichmachers **W,** wobei natürlich auch mehrfach umgeesterte Alkoxysilane erhalten werden können.

Bevorzugt wird die Reaktion unter kontinuierlicher Entfernung des entstehenden Alkohols R¹¹OH bei erniedrigtem Druck und/oder erhöhter Temperatur und unter Anwesenheit eines Katalysators **K** für die Umesterung von Silanestern, mit einer Reaktionsausbeute an Reaktivweichmacher **W** von mindestens 50%, insbesondere mindestens 75%, besonders bevorzugt mindestens 90%, durchgeführt.

Als Reaktionsausbeute, in mol% bezüglich des als Reaktand eingesetzten hydroxyfunktionellen Polymers **POH,** wird hier die Menge des Reaktionsproduktes verstanden, das sich aus der Umsetzung (Umesterungsreaktion) des Silans **S** mit dem hydroxyfunktionellen Polymer **POH** bildet. Dieses Reaktionsprodukt umfasst eine Mischung aus Umesterungsprodukten, die chemisch gleich oder verschieden sein können. Die Bestimmung der Reaktionsausbeute kann mit geeigneten Methoden erfolgen. Als vorteilhaft hat sich Infrarotspektroskopie (IR Spektroskopie) erwiesen, da so Proben aus der Reaktionsmischung entnommen und rasch gemessen werden können. Geeignet sind beispielsweise ATR-IR (attenuated total reflectance IR) Spektrometer, die dem Fachmann bekannt sind und auch Proben messen können, die nur geringe Transparenz aufweisen. Darüber hinaus können auch in situ ATR IR Sonden verwendet werden, die direkt in die Reaktionsmischung ragen und ein Monitoring in Echtzeit erlauben. Die Bestimmung der Reaktionsausbeute im Sinne der vorliegenden Erfindung mittels IR Spektroskopie erfolgt bevorzugt durch das Überwachen der OH-Bande des hydroxyfunktionellen Polymer **POH** im Bereich von 3400-3500 cm⁻¹. Dabei wird das Abnehmen der Bandenintensität bezüglich der Basislinie (in %) der Reaktionsausbeute gleichgesetzt. Das entstandene Produkt kann dann nach der Reaktion mittels GPC bezüglich des Molekulargewichts verifiziert werden.

Ein weiterer Aspekt der vorliegenden Erfindung ist also ein Verfahren zur Herstellung eines Reaktivweichmachers für feuchtigkeitshärtende Zusammensetzungen die mindestens ein silanfunktionelles Polymer **P** enthalten, umfassend die Schritte
1. Mischen mindestens eines hydroxyfunktionellen Polymers **POH** der Formel (V), wie vorgängig beschrieben, mit einem Katalysator **K** für die Umesterung von Silanestern,
2. Zugabe von n Moläquivalenten mindestens eines Silans **S** der Formel (VI), wie vorgängig beschreiben, oder Oligomeren davon, wobei die Menge an Katalysator **K** bevorzugt zwischen 1 und 3 mol% bezogen auf die Menge an Silan **S** eingestellt ist.
3. Erwärmen der Reaktionsmischung unter Rühren auf eine Temperatur, die nicht mehr als 20 °C vom Siedepunkt des Spaltalkohols R¹¹OH abweicht und/oder Erniedrigen des Drucks über der Reaktionsmischung auf 50 bis 750 mbar, bevorzugt 100 bis 500 mbar, insbesondere 150 bis 400 mbar,
4. Belassen der Reaktion unter diesen Bedingungen bis mindestens 50 mol%, bevorzugt mindestens 75 mol%, insbesondere mindestens 90 mol% der Reaktanden **POH** und **S** umgesetzt sind.

Ein weiterer Aspekt der Erfindung ist das Reaktionsprodukt erhalten aus obengenanntem Verfahren, was dem Reaktivweichmacher **W** entspricht.

Als Katalysator **K** eignen sich alle Substanzen, welche die Umesterung von Silanestern katalysieren. Geeignet sind beispielsweise Metallkomplexe, insbesondere Titanate, Alkali- oder Erdalkalialkoxylate, wie beispielsweise Natriumethanolat, und Ionenaustauscher.
Bevorzugt sind Alkalialkoxylate und Metallkomplexe, insbesondere Titanante. Titanate weisen den Vorteil auf, dass sie besonders aktiv sind, aber das Produkt nicht unerwünscht verfärben.

Geeignete Organotitanate weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können. Bevorzugtes Organotitanat ist Titanium Ethylacetoacetat.

Geeignete Organotitanate sind beispielsweise unter den Handelsnamen Tyzor^{®} AA, GBA, GBO, AA-75, AA-65, AA-105, DC, BEAT, IBAY kommerziell erhältlich von der Firma Dorf Ketal, Indien, oder unter den Handelsnamen Tytan™ PBT, TET, X85, TAA, ET, S2, S4 oder S6 kommerziell erhältlich von Borica, Taiwan.

Der Anteil des Katalysators **K** bei der Herstellung des Reaktivweichmachers **W** beträgt vorzugsweise zwischen 1 und 3 mol%, insbesondere 1.5 bis 2.5 mol%, bevorzugt 1.8 bis 2.2 mol%, bezogen auf die molare Menge des eingesetzten Silans **S.**

Weiterhin betrifft die vorliegende Erfindung die Verwendung eines Reaktionsprodukts aus mindestens einem hydroxyfunktionellen Polymer **POH** der Formel (V) wie vorgüängig beschrieben mit n Äquivalenten mindestens eines Silans **S** der Formel (VI) oder Oligomeren davon, wie vorgängig beschrieben, als Reaktivweichmacher in einer feuchtigkeitshärtenden Zusammensetzung umfassend mindestens ein silanfunktionelles Polymer **P.**

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen.
Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte Zusammensetzung.

Weiterhin kann die erfindungsgemässe Zusammensetzung zusätzlich weitere Bestandteile enthalten. Beispielsweise sind derartige Bestandteile Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowing agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltriethoxysilan, α-funktionelle Silane wie N-(Silylmethyl)-O-methyl-carbamate, insbesondere N-(Methyldiethoxysilylmethyl)-O-methyl-carbamat, (Methacryloxymethyl)silane, Ethoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; Katalysatoren für die Aushärtung von silanfunktionellen Polymeren wie beispielsweise Organozinnverbindungen, Organotitanate, Organozirkonate, basische Aminverbindungen oder andere dem Fachmann bekannte Katalysatoren für silanfunktionelle Polymere; sowie weitere üblicherweise in feuchtigkeitshärtenden Zusammensetzungen eingesetzte Substanzen.

Es ist jedoch bevorzugt dass die erfindungsgemässen Zusammensetzungen weniger als 10 Gew.-%, bevorzugt weniger als 5 Gew.-%, Weichmacher wie oben beschrieben enthält, bezogen auf die gesamte Zusammensetzung, insbesondere Weichmacher mit Carbonsäureestergruppen. Besonders bevorzugt ist es, wenn die erfindungsgemässe Zusammensetzung höchstens 2.5 Gew.-%, bezogen auf die gesamte Zusammensetzung, an Weichmachern, insbesondere Weichmachern mit Carbonsäureestergruppen, enthält. Weiterhin können gegebenenfalls neben den erfindungsgemässen Reaktivweichmachern **W** noch weitere so genannte Reaktivverdünner eingesetzt werden, welche bei der Aushärtung der Zusammensetzung, insbesondere durch Reaktion mit den Silangruppen, in die Polymermatrix eingebunden werden.

Es ist vorteilhaft, alle genannten, in der Zusammensetzung gegebenenfalls vorhandenen Bestandteile, insbesondere Füllstoff und Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Silangruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Die vorhergehend beschriebene Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Besonders bevorzugte Ausführungsformen der erfindungsgemässen Zusammensetzung enthalten 15 bis 50 Gew.-%, bevorzugt 20 bis 40 Gew.-%, Polymer **P** und zwischen 10 und 30 Gew.-%, bevorzugt zwischen 15 und 25 Gew.-%, Reaktivweichmacher **W** und zwischen 0 und 60 Gew.-%, bevorzugt zwischen 10 und 50 Gew.-%, Füllstoff und weniger als 10 Gew.-%, bevorzugt weniger als 5 Gew.-%, Weichmacher, insbesondere Weichmacher mit Carbonsäureestergruppen.

Bei der Applikation der beschriebenen Zusammensetzung auf mindestens einen Festkörper oder Artikel kommen die in der Zusammensetzung enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren beschleunigt werden können, härtet die Zusammensetzung schliesslich aus. Dieser Prozess wird auch als Vernetzung bezeichnet. Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die beispielsweise über einen Statikmischer eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchtigkeit und der Klebegeometrie, bestimmt und verlangsamt sich in der Regel mit dem Fortschreiten der Aushärtung.

Weiterhin umfasst die vorliegende Erfindung die Verwendung einer vorhergehend beschriebenen Zusammensetzung als Klebstoff, Dichtstoff oder Beschichtung.
Weiterhin umfasst die vorliegende Erfindung die Verwendung einer vorhergehend beschriebenen Zusammensetzung als Klebstoff, Dichtstoff oder Beschichtung insbesondere auf Substraten ausgewählt aus der Gruppe umfassend Holz, Naturstein und Kunststoffe, insbesondere Polyvinylchlorid, Polystyrol, Polymethylmethacrylat und Polycarbonat.

Die erfindungsgemässe Zusammensetzung wird insbesondere verwendet in einem Verfahren des Verklebens zweier Substrate **S1** und **S2** umfassend die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung innerhalb der Offenzeit der Zusammensetzung;
iii) Aushärtung der Zusammensetzung mittels Wasser;
wobei die Substrate **S1** und **S2** gleich oder verschieden voneinander sind.

Weiterhin kann die erfindungsgemässe Zusammensetzung auch verwendet werden in einem Verfahren der Abdichtung oder des Beschichtens umfassend die Schritte
i') Applikation einer Zusammensetzung gemäss vorhergehender Beschreibung auf ein Substrat **S1** und/oder zwischen zwei Substrate **S1** und **S2;**
ii') Aushärtung der Zusammensetzung mittels Wasser, insbesondere in der Form von Luftfeuchtigkeit;
wobei die Substrate **S1** und **S2** gleich oder verschieden voneinander sind.

Als Substrate **S1** und/oder **S2** eignen sich insbesondere Substrate, welche ausgewählt sind aus der Gruppe bestehend aus Beton, Mörtel, Backstein, Ziegel, Gips, ein Naturstein wie Granit oder Marmor, Glas, Glaskeramik, Metall oder Metalllegierung, Holz, Kunststoff und Lack.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, bevorzugt in Form einer Raupe, wobei diese vorteilhaft eine im Wesentlichen runde oder dreieckige Querschnittsfläche aufweist. Geeignete Methoden zum Auftragen der Zusammensetzung sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters. Eine erfindungsgemässe Zusammensetzung mit guten Applikationseigenschaften weist eine hohe Standfestigkeit und einen kurzen Fadenzug auf. Das heisst, sie bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Weiterhin betrifft die Erfindung einen Gegenstand, der mit einer feuchtigkeitshärtenden Zusammensetzung wie sie vorhergehend beschrieben worden ist, abgedichtet, verklebt oder beschichtet wurde.

Weiterhin betrifft die Erfindung eine gehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit, also eine ausgehärtete Zusammensetzung wie vorhergehend beschrieben.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein Transportmittel oder ein Teil davon, um ein industriell gefertigtes Gut oder um ein Konsumgut, insbesondere ein Boden, ein Fenster, eine Haushaltsmaschine, oder ein Transportmittel oder ein Anbauteil eines Transportmittels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit,** und die **Bruchdehnung** wurden nach DIN EN 53504 (Zuggeschwindigkeit: 200 mm/min) an während 7 Tagen bei 23 °C und 50 % relativer Luftfeuchtigkeit ausgehärteten Filmen mit einer Schichtdicke von 2 mm bestimmt.

**Gelpermeationschromatographie** (GPC) der hergestellten Reaktivweichmacher wurde gemessen mit einer SDV Säule 100, 1000, 10⁴ A, (0.8 x 30 cm, 5 µm) mit THF als Eluent, einer Fliessgeschwindigkeit von 1 mL/min bei 35°C. Der Standard war Polystyrol (474-2'520'000 g/mol). Die jeweiligen Proben wurden in Mengen zu 100 mg in 10 mL THF gelöst und mit einem 0.25 µm PTFE Membranfilter filtriert.

Figur 1 zeigt ein GPC Diagramm das nach dieser Methode gemessen wurde.

### Herstellung der Reaktivweichmacher W

Testansätze wurden in einem Rotationsverdampfer durchgeführt.
Die für jeden Versuch verwendeten hydroxyfunktionellen Polymere **POH** und Silane **S** sind in Tabellen 2 und 3 dargestellt. Die genaue Beschreibung der Rohstoffe sind in Tabelle 1 dargestellt.

Dabei wurden jeweils 15 oder 30 mmol hydroxyfuntionelles Polymer **POH** (siehe unten) und Katalysator **K** (Titanium Ethylacetoacetat, 2 mol% relativ zum Silan) in einen Rundkolben eingewogen und gut vermischt. Dann wurde das Silan **S** (jeweils 30 mmol) zugegeben. Für alle Reaktionen wurde der Molgehalt an Silan **S** konstant gehalten und der Molgehalt von hydroxyfuntionellem Polymer **POH** in Anhängigkeit von seiner OH-Funktionalität variiert, so dass wenn beispielsweise im Falle eines Monools 30 mmol eingesetzt wurden, im Falle eines Diols nur 15 mmol.

Die Reaktionsmischung wurde auf 80 °C im Wasserbad erwärmt und mittels Rotationsverdampfers unter starkem Rotieren für 30 min vorreagiert. Dann wurde der Druck über der Reaktionsmischung auf 200 mbar erniedrigt. Die Reaktion wurde auf 80 °C und bei 200 mbar Druck während 2 bis 3 h laufen gelassen. Während dieser Zeit wurden in regelmässigen Abständen von ca 30 min IR Spektren gemessen (Perkin Elmer ATR IR Spektrometer mit ZnSe Kristall und MCT Detektor). Die Reaktion wurde gestoppt wenn zwischen zwei Messungen keine weitere Reduktion der OH-Bande (bei 3400-3500 cm⁻¹) mehr festgestellt werden konnte. Das so hergestellte Reaktionsprodukt wurde in eine luftdichte Flasche abgefüllt und in den Klebstoffformulierungen als Reaktivweichmacher W eingesetzt.

### Herstellung des silanfunktionellen Polymers P-1

Unter Stickstoffatmosphäre wurden 5687 g Polyol Acclaim® 4200 (Bayer MaterialScience AG, Deutschland) 712 g Desmodur 44 MC L (Covestro AG) und 0.6g DABCO 33 LV (Air Products) unter stetigem Rühren auf 80 °C aufgeheizt und bei dieser Temperatur belassen. Nach einer Stunde Reaktionszeit wurde mittels Titration ein freier Gehalt an Isocyanatgruppen von 1.9 Gew.-% erreicht. Anschliessend wurden1070 g N-(3-Trimethoxysilylpropyl)-amino-bernsteinsäure-diethylester beigefügt und für weitere 2 Stunden bei 80 °C weitergerührt. Die Reaktion wurde abgebrochen, sobald kein freies Isocyanat mehr mittels IR-Spektroskopie (2275 - 2230 cm-1) nachzuweisen war. Das Produkt wurde auf Raumtemperatur (23°C) abgekühlt und unter Ausschluss von Feuchtigkeit aufbewahrt. Das so hergestellte silanfunktionelle Polyurethanpolymer **P-1** ist bei Raumtemperatur flüssig.

N-(3-Trimethoxysilyl-propyl)-amino-bernsteinsäure-diethylester wurde wie folgt hergestellt: 51.0 g 3-Aminopropyl-trimethoxysilan (Silquest® A-1110, Momentive Performance Materials Inc., USA) wurden vorgelegt. Unter gutem Rühren wurden bei Raumtemperatur langsam 49.0 g Maleinsäure-diethylester (Sigma Aldrich, Schweiz) zugegeben und die Mischung während 2 Stunden bei Raumtemperatur gerührt.

### Herstellung der Klebstoffe

Es wurde zunächst ein Masterbatch hergestellt, der ausser dem Weichmacher oder Reaktivweichmacher **W** und dem Härtungskatalysator alle Bestandteile enthält. In einem Vakuummischer wurden dazu 23 Gewichtsteile Polymer P-1 und 2 Gewichtsteile Vinyltrimethoxysilan (Silquest* A-171, Momentive) vorgelegt und während 5 min gemischt. Anschliessend wurden 48 Gewichtsteile getrocknete, gemahlene Kreide (Omyacarb^{®} 5-GU, Omya AG, Schweiz), 0.1 Gewichtsteile Stabilisator (Irganox^{®} 1076, BASF) und 1.9 Gewichtsteile Thixotropiermittel (Thixatrol^{®} ST, Elementis Specialities) während 15 Minuten bei 60 °C eingeknetet. Bei ausgeschalteter Heizung wurden anschliessend 1 Gewichtsteil 3-Aminopropyltrimethoxysilan (Silquest* A-1110, Momentive) zugegeben und unter Vakuum während 10 Minuten zu einer homogenen Paste verarbeitet und luftdicht abgepackt.

Aus diesem Masterbatch wurden dann die jeweiligen Versuche hergestellt. Dazu wurden jeweils 22 Gewichtsteile Reaktivweichmacher **W** oder Weichmacher, entsprechend den Angaben in Tabellen 2 und 3, sowie 2 Gewichtsteile Härtungskatalysator (2 Gew.-% Dibutylzinndilaurat in Diisononylphthtalat) zugegeben und alles in einem Speedmixer zur fertigen, homogenen Klebstoffmasse vermischt. Diese wurde dann in innenlackierte Aluminium-Spreizkolbenkartuschen abgefüllt.

### Verwendete Rohstoffe für Reaktivweichmacher W

Es wurde eine Reihe von erfindungsgemässen Reaktivweichmachern **W** hergestellt. Die verwendeten Rohstoffe für deren Herstellung nach dem oben beschriebenen Verfahren sind in Tabelle 1 dargestellt.

**Tabelle 1: Verwendete Rohstoffe für die Herstellung der Reaktivweichmacher W und Weichmacher für Vergleichsversuche.**

| **Bezeichnung** | **Typ** | **Handelsname** | **Eigenschaften** |
|---|---|---|---|
| Synalox 100-20B | Hydroxyfunktionelles Polymer POH | SYNALOX™ 100-20B (Dow) | PPG Monool, 750 g/mol |
| Dowfax DF 143 | Hydroxyfunktionelles Polymer POH | DOWFAX™ DF 143 (Dow) | PPG Monool, 1300 g/mol |
| Dowfax DF 141 | Hydroxyfunktionelles Polymer POH | DOWFAX™ DF 141 (Dow) | PPG Monool, 1800 g/mol, EO endcapped |
| Acclaim 4200 | Hydroxyfunktionelles Polymer POH | Acclaim^{®} Polyol 4200 (Covestro) | PPG Diol, 4000 g/mol |

| Dowfax 100N15 | Hydroxyfunktionelles Polymer POH | DOW FAX™ 100N15 (Dow) | PPG Diol, 4500 g/mol, EO endcapped |
|---|---|---|---|
| S A-171 | Silan S | Silquest* A-171 (Momentive) | Vinyltrimethoxysilan |
| SA-1110 | Silan S | Silquest* A-1110 (Momentive) | Aminopropyltrimethoxy-silan |
| D 6490 | Silan S | Dynasilan^{®} 6490 (Evonik) | Oligomeres Vinylmethoxysilan (505 g/mol) |
| Dyn A | Silan S | Dynasilan^{®} A (Evonik) | Tetraethoxysilan |
| DINCH | Weichmacher | Hexamoll^{®} DINCH^{®} (BASF) | 1,2-Cyclohexan-dicarbonsäurediisononylester |

Der Begriff "Monool" beschreibt Polymere mit einer Hydroxyfunktion (Hydroxylgruppe). Der Begriff "Diol" beschreibt Polymere mit zwei Hyxdroxylgruppen. Die Abkürzung "PPG" steht für Polypropylenglykol, die Abkürzung "EO" steht für Ethylenoxid. Die aufgelisteten Polymere sind Polyadditionsprodukte (Polyether) aus Propylenoxid, die teilweise mit Ethylenoxid-Monomeren endständig reagiert worden sind.

### Testresultate

Es wurden nach dem weiter oben beschriebenem Verfahren eine Reihe von Beispielszusammensetzungen hergestellt, die erfindungsgemäss einen vorgängig hergestellten Reaktivweichmacher **W** enthalten (jeweils 22 Gew-%). Diese Beispiele Z-1 bis Z-5 und Z-7 bis Z-16 sind in Tabelle 2 dargestellt. Die Edukte der jeweils verwendeten Reaktivweichmacher **W** sind in Spalten 2 und 3 der Tabelle aufgelistet. Zusätzlich wurde noch ein Referenzbeispiel (Z-6) hergestellt, das anstelle eines Reaktivweichmachers **W** einen herkömmlichen Weichmacher in gleicher Menge enthält. Bei allen Beispielen wurden mechanische Werte nach Aushärtung gemessen. Dabei zeigte sich, dass die erfindungsgemässen Beispiele durchwegs höhere Zugfestigkeiten und gleichzeitig mindestens gleiche, meist aber höhere Bruchdehnungen aufwiesen, als das Referenzbeispiel Z-6.

**Tabelle 2: Testresultate (Zugfestigkeit und Bruchdehnung) der Beispielzusammensetzungen enthaltend einen vorgängig hergestellten Reaktivweichmacher W aus einem OH-funktionellen Polymer POH und einem Silan S, sowie Vergleichsversuch mit herkömmlichem Weichmacher.**

| **Beispiel** | **OH-funktionelles Polymer POH** | **Silan S** | **Weichmacher** | **Zugfestigkeit [MPa]** | **Bruchdehnung [%]** |
|---|---|---|---|---|---|
| Z-1 | Synalox 100-20B | S A-171 | - | 2.0 | 80 |
| Z-2 | Dowfax DF 143 | S A-171 | - | 2.0 | 79 |
| Z-3 | Dowfax DF 141 | S A-171 | - | 2.0 | 84 |
| Z-4 | Acclaim 4200 | S A-171 | - | 2.0 | 71 |
| Z-5 | Dowfax 100N15 | S A-171 | - | 1.8 | 81 |
| Z-6 (Ref.) | - | - | DINCH | 1.0 | 48 |
| Z-7 | Synalox 100-20B | SA-1110 | - | 1.7 | 51 |
| Z-8 | Dowfax DF 143 | SA-1110 | - | 2.3 | 63 |
| Z-9 | Dowfax DF 141 | SA-1110 | - | 2.3 | 68 |
| Z-10 | Acclaim 4200 | SA-1110 | - | 2.1 | 68 |
| Z-11 | Dowfax 100N15 | SA-1110 | - | 2.2 | 73 |
| Z-12 | Synalox 100-20B | D 6490 | - | 3.3 | 47 |
| Z-13 | Dowfax DF 143 | D 6490 | - | 2.2 | 75 |
| Z-14 | Dowfax DF 141 | D 6490 | - | 2.5 | 68 |
| Z-15 | Dowfax 100N15 | D 6490 | - | 2.3 | 73 |
| Z-16 | Dowfax DF 143 | Dyn A | - | 2.1 | 67 |

Um zu zeigen dass die Weichmacherwirkung des Reaktivweichmachers **W** nicht lediglich vom hydroxyfunktionellen Polymer **POH** herrührt, wurden zusätzliche Versuche durchgeführt. In 3 weiteren Referenzbeispielen wurden Zusammensetzungen hergestellt, welche dieselbe Menge an hydroxyfunktionellem Polymer **POH** und Silan **S** enthalten, wie 3 erfindungsgemässe Beispiele, mit dem Unterschied, dass aus den hydroxyfunktionellen Polymeren **POH** und den Silanen **S** vorgängig kein Reaktivweichmacher **W** hergestellt worden ist. Diese Versuche, als *in situ* bezeichnet, sind in Tabelle 3 neben den erfindungsgemässen vergleichbaren Versuchen dargestellt. Zusätzlich dazu wurde noch ein Referenzversuch druchgeführt, der nur das hydroxyfunktionelle Polymer **POH** enthält, nicht aber das Silan **S** (Z-20).

Die Ergebnisse in Tabelle 3 zeigen, dass der Reaktivweichmacher **W,** vorgängig aus den Reaktanden hergestellt und als Reaktionsprodukt in die Zusammensetzung gebracht, viel bessere Ergebnisse liefert als wenn die Reaktanden unreagiert in die Zusammensetzung eingebracht werden. In allen vergleichbaren Beispielen besitzen die erfindungsgemässen Zusammensetzungen eine höhere Zugfestigkeit und eine höhere Bruchdehnung als die Referenzbeispiele.

**Tabelle 3: Vergleich vorgängig hergestellter Reaktivweichmacher W mit in situ Versuchen, wo die hydroxyfunktionellen Polymere POH und Silane S ohne Vorreaktion zugegeben worden sind.**

| **Beispiel** | **OH-funktionelles Polymer POH** | **Silan S** | **Reaktivweichmacher W vorreagiert oder *in situ*** | **Zugfestigkeit [MPa]** | **Bruchdehnung [%]** |
|---|---|---|---|---|---|
| Z-1 | Synalox 100-20B | S A-171 | vorreagiert | 2.0 | 80 |
| Z-17 (Ref.) | Synalox 100-20B | S A-171 | *in situ* | 1.6 | 55 |
| Z-7 | Synalox 100-20B | S A-1110 | vorreagiert | 1.7 | 51 |
| Z-18 (Ref.) | Synalox 100-20B | S A-1110 | *in situ* | 1.0 | 24 |
| Z-12 | Synalox 100-20B | D 6490 | vorreagiert | 3.3 | 47 |
| Z-19 (Ref.) | Synalox 100-20B | D 6490 | *in situ* | 1.4 | 15 |
| Z-20 (Ref.) | Synalox 100-20B | - | kein Silan | 1.5 | 67 |

## Patentansprüche

1. Feuchtigkeitshärtende Zusammensetzung umfassend
a) mindestens ein silanfunktionelles Polymer **P,** und
b) mindestens einen Reaktivweichmacher **W,**
**dadurch gekennzeichnet, dass**
der Reaktivweichmacher **W** vorgängig hergestellt wurde durch die Reaktion mindestens eines hydroxyfunktionellen Polymers **POH** der Formel (V) mit n Äquivalenten mindestens eines Silans **S** der Formel (VI) oder Oligomeren davon
R⁹(̵OH)ₙ (V) 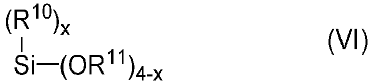
wobei
R⁹ für einen n-wertigen, über Kohlenstoff gebundenen Rest eines linearen oder verzweigten Polymers mit einem mittleren Molekulargewicht von zwischen 250 und 20'000 g/mol steht;
R¹¹ für eine Alkylgruppe mit 1 bis 6 C-Atomen steht;
R¹⁰ für eine Alkylgruppe mit 1 bis 10 C-Atomen steht, welche gegebenenfalls ein oder mehrere Heteroatome, ausgewählt aus der Gruppe Stickstoff, Sauerstoff und Schwefel, enthält;
x für 0 oder 1 steht; und
n für eine ganze Zahl zwischen 1 und 3 steht.

2. Zusammensetzung gemäss Anspruch 1, **dadurch gekennzeichnet, dass** der Reaktivweichmacher **W** hergestellt wurde unter kontinuierlicher Entfernung des entstehenden Alkohols R¹¹OH bei erniedrigtem Druck und/oder erhöhter Temperatur und unter Anwesenheit eines Katalysators **K** für die Umesterung von Silanestern, mit einer Reaktionsausbeute an Reaktivweichmacher **W** von mindestens 50%.

3. Zusammensetzung gemäss Anspruch 2, **dadurch gekennzeichnet, dass** der Katalysator **K** ein Organotitanat umfasst, insbesondere Titanium Ethylacetoacetat.

4. Zusammensetzung gemäss einem der vorhergehenden Ansprüche,
**dadurch gekennzeichnet, dass** der Reaktivweichmacher **W** mit einer Menge von zwischen 10 und 35 Gew.-%, bezogen auf die gesamte Zusammensetzung, enthalten ist.

5. Zusammensetzung gemäss einem der vorhergehenden Ansprüche,
**dadurch gekennzeichnet, dass** die Zusammensetzung weniger als 2.5 Gew.-% Weichmacher mit Carbonsäureestergruppen enthält, bezogen auf die gesamte Zusammensetzung.

6. Zusammensetzung gemäss einem der vorhergehenden Ansprüche,
**dadurch gekennzeichnet, dass** das hydroxyfunktionelle Polymer **POH** einen Polyether und/oder ein Kohlenwasserstoffpolymer umfasst.

7. Zusammensetzung gemäss Anspruch 6, **dadurch gekennzeichnet, dass** das hydroxyfunktionelle Polymer **POH** ein Molekulargewicht von zwischen 450 und 10'000 g/mol aufweist und Parameter n für 1 oder 2 steht.

8. Zusammensetzung gemäss einem der vorhergehenden Ansprüche,
**dadurch gekennzeichnet, dass** das Silan **S** mindestens ein Silan ausgewählt aus der Gruppe Tetralkoxysilan, Trialkoxyvinylsilan, Aminopropyltriakoxysilan, oder Oligomere solcher Silane umfasst.

9. Verwendung eines Reaktionsprodukts aus mindestens einem hydroxyfunktionellen Polymer **POH** der Formel (V) mit n Äquivalenten mindestens eines Silans **S** der Formel (VI) oder Oligomeren davon als Reaktivweichmacher in einer feuchtigkeitshärtenden Zusammensetzung umfassend mindestens ein silanfunktionelles Polymer **P,**
R⁹(̵OH)ₙ (V) 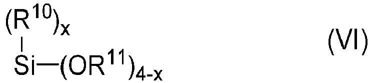
wobei
R⁹ für einen n-wertigen, über Kohlenstoff gebundenen Rest eines linearen oder verzweigten Polymers mit einem mittleren Molekulargewicht von zwischen 250 und 20'000 g/mol steht;
R¹¹ für eine Alkylgruppe mit 1 bis 6 C-Atomen steht;
R¹⁰ für eine Alkylgruppe mit 1 bis 10 C-Atomen steht, welche gegebenenfalls ein oder mehrere Heteroatome, ausgewählt aus der Gruppe Stickstoff, Sauerstoff und Schwefel, enthält;
x für 0 oder 1 steht; und
n für eine ganze Zahl zwischen 1 und 3 steht.

10. Verwendung einer Zusammensetzung gemäss einem der Ansprüche 1 bis 8 als Klebstoff, Dichtstoff oder als Beschichtung.

11. Verwendung einer Zusammensetzung gemäss Anspruch 10 auf Substraten ausgewählt aus der Gruppe umfassend Holz, Naturstein und Kunststoffe, insbesondere Polyvinylchlorid, Polystyrol, Polymethylmethacrylat und Polycarbonat.

12. Gegenstand, der mit einer feuchtigkeitshärtenden Zusammensetzung gemäss einem der Ansprüche 1 bis 8 abgedichtet, verklebt oder beschichtet wurde.

13. Verfahren zur Herstellung eines Reaktivweichmachers für feuchtigkeitshärtende Zusammensetzungen die mindestens ein silanfunktionelles Polymer **P** enthalten, umfassend die Schritte
a) Mischen mindestens eines hydroxyfunktionellen Polymers **POH** der Formel (V) mit einem Katalysator **K** für die Umesterung von Silanestern,
b) Zugabe von n Moläquivalenten mindestens eines Silans **S** der Formel (VI) oder Oligomeren davon,
R⁹(̵OH)ₙ (V) 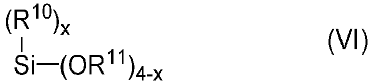
wobei R⁹ für einen n-wertigen, über Kohlenstoff gebundenen Rest eines linearen oder verzweigten Polymers mit einem mittleren Molekulargewicht von zwischen 250 und 20'000 g/mol steht;
R¹¹ für eine Alkylgruppe mit 1 bis 6 C-Atomen steht;
R¹⁰ für eine Alkylgruppe mit 1 bis 10 C-Atomen steht, welche gegebenenfalls ein oder mehrere Heteroatome, ausgewählt aus der Gruppe Stickstoff, Sauerstoff und Schwefel, enthält;
x für 0 oder 1 steht; und
n für eine ganze Zahl zwischen 1 und 3 steht, und
die Menge an Katalysator **K** bevorzugt zwischen 1 und 3 mol% bezogen auf die Menge an Silan **S** eingestellt ist.
c) Erwärmen der Reaktionsmischung unter Rühren auf eine Temperatur, die nicht mehr als 20 °C vom Siedepunkt des Spaltalkohols R¹¹OH abweicht und/oder Erniedrigen des Drucks über der Reaktionsmischung auf 50 bis 750 mbar,
d) Belassen der Reaktion unter diesen Bedingungen bis mindestens 50 mol%, bevorzugt mindestens 75 mol%, insbesondere mindestens 90 mol% der Reaktanden umgesetzt sind.

14. Reaktionsprodukt erhalten aus dem Verfahren aus Anspruch 13.

15. Ausgehärtete Zusammensetzung nach einem der Ansprüche 1 bis 8.
